# FASCICULE DE BREVET EUROPEEN

(11) **EP 3 666 664 B1**
(45) Date de publication et mention de la délivrance du brevet: **24.02.2021**
(21) Numéro de dépôt: 19211535.0
(22) Date de dépôt: 26.11.2019
(51) Int. Cl.: G07C 5/08, B64F 5/40, B64F 5/60, G06Q 10/00, G06Q 50/30

(54) **PROCEDE ET DISPOSITIF D'OPTIMISATION DE TESTS DE SYSTEMES EN PARTICULIER D'UN AERONEF**
VERFAHREN UND VORRICHTUNG ZUR OPTIMIERUNG DER SYSTEMTESTS INSBESONDERE EINES LUFTFAHRZEUGS
METHOD AND DEVICE FOR OPTIMISING TESTING OF SYSTEMS, IN PARTICULAR OF AN AIRCRAFT

(30) Priorité: 12.12.2018 FR 1872782
(43) Date de publication de la demande: 17.06.2020
(73) Titulaire: AIRBUS OPERATIONS (S.A.S.), 31060 Toulouse (FR)
(72) Inventeur: DESCLAUX-CHEVALIER, Anne-Laure, 31060 TOULOUSE Cedex 9 (FR); ESCORIHUELA, Emmanuelle, 31060 TOULOUSE Cedex 9 (FR); PASSEMAR, Serge, 31060 TOULOUSE Cedex 9 (FR); REY, Jean-Christophe, 31060 TOULOUSE Cedex 9 (FR); SENEGAS, Christelle, 31060 TOULOUSE Cedex 9 (FR); BRESSY, Christophe, 31060 TOULOUSE Cedex 9 (FR)
(74) Mandataire: Gicquel, Olivier Yves Gérard

(56) Documents cités:
- EP-A1- 2 266 880
- WO-A1-2019/071344
- US-A1- 2009 187 449
- US-A1- 2013 138 467

## Description

La présente invention concerne un procédé et un dispositif d'optimisation de tests de systèmes, en particulier d'un aéronef.

De manière usuelle, lors d'opérations de fabrication ou de maintenance d'un aéronef, en particulier d'un avion de transport, les systèmes de l'aéronef sont testés afin de s'assurer qu'ils fonctionnent correctement avant la livraison de l'aéronef. Les documents US2009/187449, US2013/138467 ou encore EP2266880 décrivent différentes solutions afin de tester les systèmes d'un aéronef.

Pour réaliser ces tests, la solution la plus commune consiste à utiliser un dispositif situé au sol et connecté au système de l'aéronef qui est à tester. Le dispositif et le système sont connectés par un outillage de test spécifique au système. L'outillage spécifique permet au dispositif et au système d'échanger des données servant à réaliser les tests..

La mise en place du test d'un système nécessite l'installation, au préalable, de l'outillage de test spécifique à ce système, par exemple, la connexion d'un réseau de câbles. Certains systèmes ne peuvent pas être testés directement et demandent l'installation d'un outillage spécifique dit « faux système », par exemple le remplacement du système par des boîtiers de tests. Le test d'un tel système est alors réalisé au travers du faux système.

La procédure de test du système est déterminée par le dispositif. La procédure de test est affichée sur un écran dans le cockpit. Un opérateur, présent dans le cockpit réalise la procédure de test en enchaînant diverses opérations, qui peuvent être manuelles (appuyer sur des boutons, commander l'exécution de tests par le système de maintenance, ...) ou automatiques.

L'exécution de certains tests peut nécessiter plusieurs opérateurs, par exemple un opérateur qui appuie sur des boutons dans le cockpit et un autre opérateur qui est situé devant l'élément mécanique à tester. Les données de test sont reçues et vérifiées par l'opérateur dans le cockpit sans être enregistrées.

De telles solutions nécessitent donc l'installation d'outillages spécifiques par des opérateurs pour chaque système à tester. Par ailleurs, l'exécution successive des tests est déterminée de façon statique. Les tests pouvant être réalisés de façon optimisée, par exemple en parallélisant l'exécution de certains tests, dépend du nombre d'opérateurs disponibles pour effectuer ces tests et de la place disponible dans le cockpit.

Ce type de solution usuelle est donc coûteux en temps et en ressources humaines et logistiques. Ce type de solution n'est donc pas complètement satisfaisant.

La présente invention a pour but de remédier à cet inconvénient.

Pour ce faire, elle concerne un dispositif d'optimisation de tests de systèmes tel que revendiqué à la revendication 6. La demande de brevet WO2019/071344, opposable au titre de l'article 54(3) CBE, décrit le préambule de la revendication 6.

Ainsi, grâce à l'invention, l'optimisation de l'ensemble de tests en une séquence de tests puis l'exécution de cette séquence de tests ne nécessite pas l'installation dans l'aéronef ni la surveillance d'outillage dédié à chaque système. En outre, lorsque la séquence de tests est validée, la présence d'un ou de plusieurs opérateurs n'est pas nécessaire. L'ensemble de tests, choisis par un opérateur, est donc optimisé de sorte à minimiser le temps, le matériel et le nombre d'opérateur nécessaires

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
La figure 1 représente un aéronef dans lequel est embarqué un dispositif d'optimisation de tests de systèmes.
La figure 2 est un schéma synoptique d'un mode de réalisation particulier d'un dispositif d'optimisation de tests de systèmes.
La figure 3 est un schéma synoptique d'un mode de réalisation particulier d'un procédé d'optimisation de tests de systèmes.

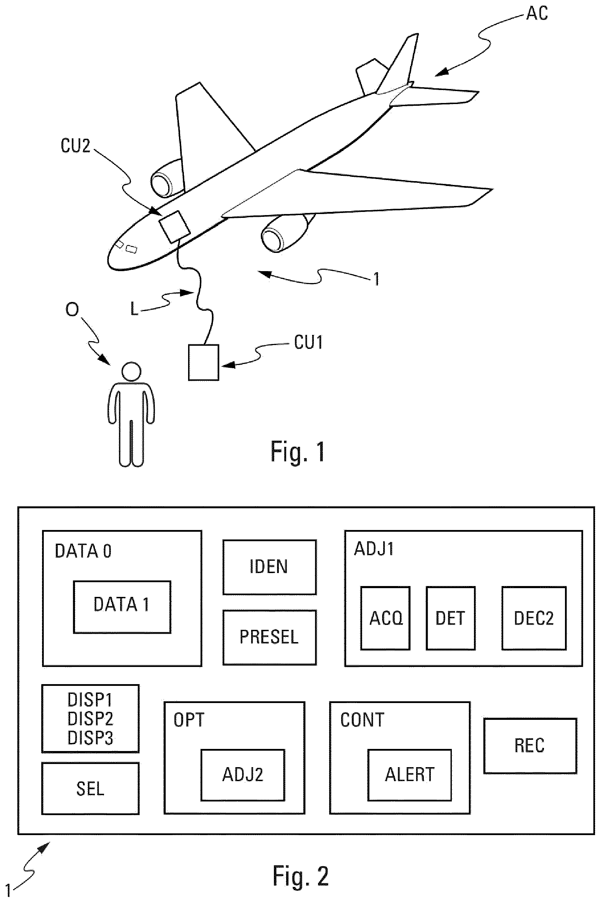

Le dispositif 1 d'optimisation représenté schématiquement dans un mode de réalisation particulier sur la figure 2, est destiné à optimiser l'exécution d'un ensemble de tests préalablement choisi dans le cadre d'opérations de configuration initiale ou de reconfiguration de systèmes de l'aéronef AC (figure 1), en particulier d'un avion de transport.

Dans le cadre de la présente invention, on entend par ensemble de tests une pluralité de vérifications du fonctionnement d'un ou de plusieurs systèmes lors d'opérations de maintenance de l'aéronef AC ou au cours de la fabrication de l'aéronef AC. Ces vérifications de fonctionnement sont nécessaires pour une configuration ou une reconfiguration des systèmes ou d'une partie des systèmes de l'aéronef AC.

Dans le cadre de l'invention, les systèmes peuvent être tout type de système embarqué, notamment le système de pressurisation de l'aéronef AC, le système de sortie ou de rentrée du train d'atterrissage, le système de refroidissement d'un moteur, ...

Comme représenté sur la figure 2, le dispositif 1 comprend un module d'identification IDEN. Ce module d'identification IDEN transmet des informations d'identification fournies par un opérateur O, à une base de données générale DATA0. Le module d'identification IDEN comporte, par exemple, un écran tactile au moyen duquel, l'opérateur O fournit les informations d'identification. À titre d'exemple, le numéro de série d'un aéronef AC est une information d'identification.

Par ailleurs, le dispositif 1 comporte la base de données générale DATA0 qui contient une pluralité de bases de données de tests DATA1. Chacune des bases de données de tests DATAI est associée à une ou plusieurs informations d'identification.

Le dispositif 1 comporte, de plus, un module de présélection PRESEL qui présélectionne, parmi la pluralité de bases de données de tests DATA1, la base de données de tests DATA1 associée aux informations d'identification transmises par le module d'identification IDEN.

Dans un mode de réalisation préféré, le dispositif 1 comporte un module d'affichage DISP1, par exemple un écran d'une tablette ou de tout autre élément mobile. Le module d'affichage DISP1 est configuré pour afficher la liste de tests exécutables par au moins l'un desdits systèmes. La liste de tests exécutables est contenue dans la base de données de tests DATA1 présélectionnée par le module de présélection PRESEL. La liste de tests exécutables est donc adaptée à l'aéronef AC identifié par les informations d'identification transmises par le module d'identification IDEN. La liste de tests exécutables comporte tous les tests pouvant être exécutés sur cet aéronef AC. Chacun des tests exécutables est associé à des conditions nécessaires à son exécution par un ou plusieurs systèmes dites conditions d'exécution.

Les conditions d'exécution sont de deux types. Les conditions d'exécution d'un premier type sont un ensemble de prérequis nécessaires pour qu'un test soit exécutable. À titre d'exemple, des prérequis de test sont :
- certaines sources d'énergie qui doivent être disponibles ;
- la validation de conditions de sécurité autour de l'aéronef AC ;
- certains systèmes qui doivent être sous tension ; et
- certains tests qui doivent être préalablement exécutés.

Les conditions d'exécution d'un second type sont un ou plusieurs attributs indiquant quels tests sont exécutables simultanément avec le test auquel sont associés ces attributs. À titre d'exemple, un test de pression des pneus et un test de pressurisation de la cabine peuvent être exécutés simultanément.

Comme représenté sur la figure 2, le dispositif 1 comporte également un module de sélection SEL permettant à l'opérateur O de sélectionner, parmi la liste de tests exécutables affichée par le module d'affichage DISP1, un ensemble de tests à exécuter. Cet ensemble de tests à exécuter comprend au moins un test exécutable présent dans la liste de tests exécutables. Le module de sélection SEL transmet l'ensemble de tests à exécuter.

Dans un mode de réalisation préféré, comme représenté sur la figure 2, le dispositif 1 comporte également un module d'ajustement ADJ1 qui ajuste l'ensemble de tests à exécuter transmis par le module de sélection SEL en fonction d'informations de fonctionnement reçues par des systèmes de l'aéronef AC.

Le module d'ajustement ADJ1 comporte :
- un élément d'acquisition ACQ qui est configuré pour acquérir les informations de fonctionnement des systèmes lors d'utilisations précédentes. Les informations de fonctionnement sont enregistrées dans des mémoires dédiées de chacun des systèmes de l'aéronef. L'élément d'acquisition ACQ a accès à ces mémoires. Les informations de fonctionnement sont relatives, par exemple, à la configuration de ces systèmes ou à des pannes détectées. Lorsque certaines des pannes détectées peuvent empêcher l'exécution d'une partie ou de la totalité de l'ensemble de tests à exécuter, les informations de fonctionnement comprennent des informations d'erreur relatives à ces pannes ;
- un élément de détermination DET qui détermine au moins un test de remplacement dans la liste de tests à exécuter, en cas de présence d'informations d'erreur. Le choix du ou des tests de remplacement prend en compte les informations d'erreur reçues des systèmes de l'aéronef AC. L'élément de détermination DET est également configuré pour transmettre le ou les tests de remplacement choisis dans la liste de tests exécutables ;
- le module d'affichage DISP1 qui affiche, à l'opérateur O, le ou les tests de remplacements déterminés par l'élément de détermination DET ; et
- un élément de décision DEC2 qui est configuré pour permettre à l'opérateur O, soit de valider le ou les tests de replacement, soit d'annuler le ou les tests de remplacement. L'élément de décision DEC2 transmet au module de sélection SEL respectivement, soit une information de validation de l'ensemble de tests VT comprenant le ou les tests de remplacement, soit une information d'annulation du ou des tests de remplacement AT.

Le module de sélection SEL est également configuré pour :
- remplacer le ou les tests qui ne peuvent pas être exécutés par le ou le tests de remplacement dans l'ensemble de tests à exécuter, en cas de réception d'une information de validation VT ; ou
- enlever le ou les tests à exécuter qui ne peuvent pas être exécutés, en cas de réception d'une information d'annulation AT.

Dans un mode de réalisation préféré, le module d'affichage DISP1, l'élément de décision DEC2 et le module de sélection SEL sont agencés dans une seule et même unité d'interface à disposition de l'opérateur O. Cette unité d'interface est mobile. À titre d'exemple, cette unité d'interface mobile est une tablette comprenant un écran tactile.

Dans un mode de réalisation préféré, le dispositif 1 comporte un module d'optimisation OPT. Ce module d'optimisation OPT reçoit l'ensemble de tests à exécuter transmis par le module de sélection SEL et détermine une séquence de tests en fonction des conditions d'exécution associées à chacun des tests contenu dans l'ensemble de tests à exécuter. La séquence de tests représente une exécution optimisée, en temps et en ressources humaines et techniques, de l'ensemble de tests à exécuter. La séquence de tests comprend une pluralité de séries de tests. Chacune des séries de tests est formée d'au moins un test de l'ensemble de tests à exécuter. On entend par série de tests, un sous-ensemble de tests de l'ensemble de tests à exécuter qui sont à exécuter successivement. Si les conditions d'exécution des tests à exécuter le permettent, les séries de tests sont exécutées en parallèle. On entend par exécution en parallèle, l'exécution simultanée de plusieurs séries de tests. Dans ce mode de réalisation préféré, le module d'optimisation OPT est agencé au sol.

Par ailleurs, le dispositif 1 comprend un module d'affichage DISP2 qui affiche la séquence de tests transmise par le module d'optimisation OPT. Dans un mode de réalisation préféré, le module d'affichage DISP1 et le module d'affichage DISP2 sont un seul et même module d'affichage, comme représenté sur la figure 2. Ce module d'affichage est, par exemple, l'écran d'une tablette mobile. Dans une variante, le module d'affichage DISP1 et le module d'affichage DISP2 sont des modules d'affichage différents.

Comme représenté sur la figure 2, le dispositif 1 comporte, de plus, un module de décision DEC1 qui génère un signal. Ce signal correspond soit à un signal VS représentatif d'une décision de l'opérateur O de valider la séquence de tests affichée, soit à un signal AS représentatif d'une décision de l'opérateur O d'annuler la séquence de tests affichée.

En outre, le dispositif 1 comporte un module de commande CONT, qui, en cas de réception du signal VS généré par le module de décision DEC1, commande l'exécution de la séquence de tests par le ou les systèmes concernés. Le module de commande CONT est configuré pour servir d'interface entre le module d'optimisation OPT et les différents systèmes de l'aéronef AC. À partir d'une séquence de tests, le module de commande CONT distribue des ordres d'exécution de tests représentatifs de la séquence de tests. Le module de commande CONT coordonne leurs exécutions par les systèmes. Le module de commande CONT est également configuré pour générer des résultats représentatifs de l'exécution de la séquence de tests par les systèmes. Dans un mode de réalisation préféré, le module de commande est agencé à bord de l'aéronef AC. Dans une variante, le module de commande et le module d'optimisation sont agencés dans une même unité centrale située au sol.

Dans un mode de réalisation particulier, le module de commande CONT comprend un élément d'alerte ALERT. Cet élément d'alerte ALERT est configuré pour commander l'arrêt de l'exécution de la séquence de tests par les systèmes si un ou des résultats d'exécution sont associés à une situation particulière PS dans laquelle la suite de la séquence de tests ne peut pas être exécutée. L'élément d'alerte ALERT émet une information d'alerte relative à la situation particulière PS.

Dans le cadre de la présente invention, on entend par suite de la séquence de tests, la partie de la séquence de tests qui n'a pas encore été exécutée par les systèmes.

Par ailleurs, le module d'optimisation OPT comporte un module d'ajustement ADJ2 qui, en cas de réception d'une information d'alerte émise par l'élément d'alerte ALERT du module de commande CONT, détermine une nouvelle séquence de tests. Cette nouvelle séquence de tests est déterminée en fonction de la suite de la séquence de tests à exécuter, des conditions d'exécution des tests à exécuter dans la suite de la séquence de tests et de l'information d'alerte. Le module d'ajustement ADJ2 transmet une nouvelle séquence de tests au module de commande CONT.

Dans un mode de réalisation particulier, le dispositif 1 comprend un troisième module d'affichage DISP3 qui affiche, en temps réel, au moins certains des résultats de l'exécution de la séquence de tests générés par le module de commande CONT. De préférence, les modules d'affichage DISP1, DISP2 et le module d'affichage DISP3 sont un seul et même module d'affichage. À titre d'exemple, le module d'affichage DISP3 est l'écran d'une tablette.

Dans un autre mode de réalisation, le dispositif 1 comporte un module d'enregistrement REC qui enregistre les résultats générés par le module de commande CONT dans une base de données de résultats. À partir des résultats de cette base de donnes de résultats, il est possible permet de mettre à jour la liste des tests exécutables de la base de données de tests DATA1.

Dans un mode de réalisation particulier, au moins la base de données de données de tests DATA1, le module d'optimisation OPT et le module d'enregistrement REC sont agencés dans une même unité centrale de test CU1 située au sol. Cette unité centrale de test CU1 communique avec le module de commande CONT agencé dans une unité centrale CU2 montée à bord de l'aéronef par une liaison de communications L non filaire, comme représenté sur la figure 1. Dans une variante, la liaison de communication L entre l'unité centrale de test CU1 et l'unité centrale de test CU2 est de type filaire.

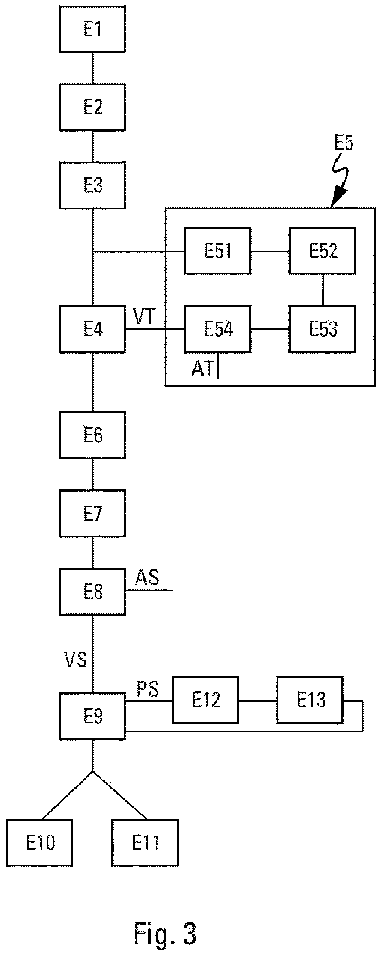

Le dispositif 1, tel que décrit ci-dessus, est susceptible de mettre en place un procédé d'optimisation de tests de systèmes d'un aéronef AC. Le procédé comprend plusieurs réalisations particulières, comme représenté sur la figure 3.

Le procédé comprend une étape d'identification E1 au cours de laquelle, l'opérateur O fournit des informations d'identification, par exemple le numéro de série d'un aéronef AC par lequel il est identifié. L'opérateur O fournit ces informations d'identification, par exemple, par l'intermédiaire d'une tablette tactile. Une base de données de tests DATA1 associée à ces informations d'identification est présélectionnée, au cours d'une étape de présélection E2, parmi la pluralité de bases de données de tests DATA1 contenue dans la base de données générales DATA0. La base de données de tests DATA1 présélectionnée est adaptée à l'aéronef identifié. Cette base de données de tests DATA1 comprend une liste de tests exécutables par un ou plusieurs systèmes de l'aéronef identifié qui est affichée au cours d'une étape d'affichage E2. Chacun des tests exécutables est associé à des conditions d'exécution. Ces conditions d'exécution concernent des prérequis, par exemple la mise sous tension préalable de certains systèmes, et des attributs spécifiant quels autres tests peuvent être exécutés simultanément.

Au cours d'une opération de sélection E4, l'opérateur sélectionne, par l'intermédiaire du module de sélection SEL, dans la liste de tests exécutables, un ou plusieurs tests. Ce ou ces tests sélectionnés forment un ensemble de tests à exécuter.

En parallèle de cette sélection, est mise en œuvre une étape d'ajustement E5 qui comprend au moins une sous-étape d'acquisition E51. Au cours de cette sous-étape d'acquisition E51, l'élément d'acquisition ACQ récupère des informations de fonctionnement de chacun des systèmes à tester. Ces informations de fonctionnement sont émises par chacun de ces systèmes. Une information de fonctionnement peut être liée à la configuration d'un système et aux pannes détectées au cours d'utilisations précédentes.

À titre d'exemple, si lors d'un vol précédent, le capteur de position de commande de vol détecte une panne, l'information de fonctionnement relative à cette panne est enregistrée dans une mémoire liée au capteur (mémoire du système ECAM, ...). L'élément d'acquisition ACQ a accès à cette mémoire et acquiert cette information de fonctionnement.

Si aucune panne n'a été détectée ou si une panne détectée n'empêche pas l'exécution d'un ou de plusieurs tests à exécuter, l'ensemble de tests à exécuter est validé et transmis au cours de l'étape de sélection E4.

Si une panne détectée ou une configuration particulière du système empêche l'exécution d'un ou de plusieurs tests de l'ensemble de tests à exécuter, l'information de fonctionnement relative à la panne ou à la configuration est une information d'erreur.

En cas d'information d'erreur, l'étape d'ajustement E5 comprend alors les sous-étapes de détermination E52, d'affichage E53 et de décision E54.

Lors de la sous-étape de détermination E52, un ou plusieurs tests de remplacement sont déterminés, parmi les tests exécutables de la liste de tests exécutables, pour remplacer le ou les tests de l'ensemble de tests à exécuter qui ne peuvent pas être exécutés. La détermination du ou des tests de remplacement prend en compte la correspondance entre les conditions d'exécution du ou des tests qui ne peuvent pas être exécutés et des informations d'erreur émises par l'élément d'acquisition ACQ. Le ou les tests de remplacement sont transmis au module d'affichage DISP1 qui les affiche au cours d'une sous-étape d'affiche E53.

L'opérateur O décide alors, au cours d'une sous-étape de décision E54 soit de valider le ou les tests de remplacement soit d'annuler le ou les tests de remplacement. La décision de valider ou d'annuler le ou les tests de remplacement est mise en œuvre par l'intermédiaire d'un élément de décision DEC2, par exemple un écran tactile d'une tablette mobile.

Si l'opérateur O décide d'annuler le ou les tests de remplacement, une information d'annulation AT est transmise par l'élément de décision DEC2 au module de sélection SEL. L'étape de sélection E4 consiste alors à enlever le ou les tests qui ne peuvent pas être exécutés de l'ensemble de tests à exécuter et transmet cet ensemble de tests à exécuter.

Si l'opérateur O décide de valider le ou les tests de remplacement, une information de validation VT est transmise par l'élément de décision DEC2 au module de sélection SEL. L'étape de sélection E4 consiste alors à remplacer le ou les tests qui ne peuvent pas être exécutés par le ou les tests de remplacement dans l'ensemble de tests à exécuter. Ce nouvel ensemble de tests à exécuter est ensuite transmis au module d'optimisation OPT.

Au cours d'une étape d'optimisation E6, l'ensemble de tests à exécuter est optimisé. L'ensemble de tests à exécuter optimisé forme une séquence de tests qui comprend une pluralité de séries de tests incluant au moins un test de l'ensemble de tests à exécuter. L'optimisation de l'ensemble de tests formant la pluralité de séries de tests est réalisée en fonction des prérequis et des attributs de chacun des tests de l'ensemble de tests à exécuter. L'optimisation est basée sur une recherche de parallélisation des séries de tests dont les attributs et les prérequis le permettent. Le module d'optimisation OPT transmet alors la séquence de tests.

Au cours d'une étape d'affiche E7, la séquence de tests émise par le module d'optimisation est affiché sur le module d'affichage DISP2. L'opérateur O décide, lors d'une étape successive de décision E8, soit de valider la séquence de tests soit d'annuler la séquence de tests.

Si la décision de l'opérateur O est d'annuler la séquence de tests, le module de décision DEC1 génère un signal AS. Aucun test n'est réalisé.

Si la décision de l'opérateur O est de valider la séquence de tests, le module de décision DEC1 génère un signal VT et la séquence de tests est transmise au module de commande CONT.

Au cours d'une étape de commande E9, l'exécution des tests formant la séquence de tests par chaque système est commandée. Des ordres d'exécution de tests sont transmis à chacun des systèmes associés aux tests qu'ils exécutent. Plusieurs systèmes peuvent effectuer des tests simultanément. Au cours de l'exécution de tests, le module de commande CONT génèrent des résultats représentatifs de l'exécution des tests des systèmes.

Tant que les tests de la séquence de tests sont exécutés sans erreurs, les résultats de l'exécution de la séquence de tests émis par le module de commande CONT sont affichés au fur et à mesure sur le module d'affichage DISP3, lors d'une étape d'affichage E10. Ils sont visualisés par l'opérateur O, situé au sol, qui s'assure du bon déroulement des tests des systèmes. De manière simultanée, les résultats de l'exécution de la séquence de tests, sont enregistrés, au cours d'une étape d'enregistrement E11, dans une base de données de résultats. Cette base de données de résultats est agencée dans la même unité centrale que la base de données de tests DATA1.

En revanche, si l'exécution d'un ou de plusieurs tests de la séquence de tests génère des résultats comprenant des erreurs, une étape d'alerte E12 est mise en œuvre par un module d'alerte ALERT. Un ou plusieurs résultats d'exécution de tests comprenant des erreurs signifient que la suite de la séquence de tests ne peut pas être exécutée. Cela correspond à une situation particulière PS. À titre d'exemple, un premier test de la séquence de tests peut nécessiter qu'un second test de la séquence de tests soit exécuté préalablement. Ce prérequis est une des conditions d'exécution du premier test de la séquence de tests. Si les résultats de l'exécution préalable de ce second test montrent des erreurs du système testé, alors le premier test ne peut pas être exécuté. Au cours de l'étape d'alerte E12, le module d'alerte ALERT commande l'arrêt de l'exécution de la suite de la séquence de tests par chacun des systèmes et émet une information d'alerte associée à la situation particulière PS.

Cette information d'alerte est reçue par un module d'ajustement ADJ2 du module d'optimisation OPT. Ce module d'ajustement ADJ2 détermine une nouvelle séquence de tests optimisée, au cours d'une étape d'ajustement E13. La nouvelle séquence de tests est optimisée en fonction des tests qu'il reste à exécuter, de leurs conditions d'exécution et de l'information d'alerte émise par l'élément d'alerte. La nouvelle séquence de tests est transmise directement par le module d'ajustement ADJ2 au module de commande CONT qui commande l'exécution par les systèmes de la nouvelle séquence de tests.

Les résultats de l'exécution de la nouvelle séquence de tests sont affichés sur le module d'affichage DISP3 au cours de l'étape d'affichage E10. Ils sont également enregistrés au fur et à mesure pendant une étape d'enregistrement E11 dans le module d'enregistrement REC.

Les étapes d'alerte E12 et d'ajustement E13 de la séquence de tests sont répétées à chaque fois qu'une situation particulière PS est rencontrée, et ceci jusqu'à ce que toute la séquence de tests soit exécutée.

Avantageusement, le dispositif 1 permet d'exécuter des tests choisis en fonction de l'état courant de l'aéronef AC et des utilisations précédentes des systèmes.

Par ailleurs, le dispositif 1 permet, en fonction du ou des tests, de s'abstenir d'une supervision de l'exécution par un ou plusieurs opérateurs. En effet, en cas de pannes rencontrées pouvant affecter la suite de la séquence de tests, le dispositif 1 optimise une nouvelle séquence de manière autonome, sans intervention d'un ou de plusieurs opérateurs.

En outre, le dispositif 1 permet une parallélisation de certains tests prenant en compte des interactions entre les systèmes.

## Revendications

1. Procédé d'optimisation de tests de systèmes d'un aéronef comprenant :
- une première étape d'affichage (E3), mise en œuvre par un premier module d'affichage (DISP1), consistant à afficher, pour un opérateur (O), une liste de tests exécutables par au moins un desdits systèmes, chacun desdits tests exécutables étant associé à des conditions d'exécution ;
- une étape de sélection (E4), mise en œuvre par un module de sélection (SEL), consistant à sélectionner et à transmettre, parmi la liste de tests exécutables, un ensemble de tests à exécuter, l'ensemble de tests à exécuter comprenant au moins un test exécutable ;
- une étape d'optimisation (E6), mise en œuvre par un module d'optimisation (OPT), consistant à déterminer et à transmettre, en fonction des conditions d'exécution, une séquence de tests représentative d'une exécution optimisée de l'ensemble de tests à exécuter, ladite séquence de tests comprenant une pluralité de séries de tests exécutables en parallèle, chacune des séries de tests comprenant au moins un test dudit ensemble de tests à exécuter ;
- une deuxième étape d'affichage (E7), mise en œuvre par un deuxième module d'affichage (DISP2), consistant à afficher, à l'opérateur (O), la séquence de tests ;
- une étape de décision (E8), mise en œuvre par un module de décision (DEC1), consistant à générer un signal correspondant soit à un premier signal (VS) représentatif d'une décision d'un opérateur (O) de valider la séquence de tests, soit à un deuxième (AS) signal représentatif d'une décision de l'opérateur (O) d'annuler la séquence de tests ;
si le signal généré par le module de décision correspond au premier signal (VS), le procédé comprend, de plus, au moins une étape de commande (E9), mise en œuvre par un module de commande (CONT), consistant à commander l'exécution de la séquence de tests par des systèmes, et à générer des résultats de l'exécution des tests de la séquence de tests par chacun des systèmes ;
**caractérisé en ce qu'**il comprend également la succession d'étapes suivantes, mise en œuvre antérieurement à la première étape d'affichage (DISP1) :
- une étape d'identification (E1), mise en œuvre par un module d'identification (IDEN), consistant à transmettre à une base de données générale (DATA0) des informations d'identification d'un ensemble de systèmes particuliers, lesdites informations d'identification étant fournies par l'opérateur (O) ; et
- une étape de présélection (E2), mise en œuvre par un module de présélection (PRESEL), consistant à présélectionner, parmi une pluralité de bases de données de test (DATA1), contenue dans la base de données générale (DATA0), une base de données de test (DATA1) associée aux informations d'identification transmises par le module d'identification (IDEN), ladite base de données de tests (DATA1) présélectionnée comprenant une liste de tests exécutables par au moins un desdits systèmes.

2. Procédé selon l'une des revendications précédentes,
**caractérisé en ce qu'**il comprend également une première étape d'ajustement (E5), mise en œuvre par un premier module d'ajustement (ADJ1), ladite première étape d'ajustement (E5) comprenant la succession d'étapes suivantes, mise en œuvre antérieurement à l'étape d'optimisation (E6) :
- une sous-étape d'acquisition (E51), mise en œuvre par un élément d'acquisition (ACQ), consistant à acquérir des informations de fonctionnement des systèmes lors d'utilisations précédentes ;
si les informations de fonctionnement comprennent des informations d'erreurs relatives à des erreurs de fonctionnement des systèmes empêchant l'exécution d'au moins une partie de l'ensemble de tests à exécuter, la succession d'étapes comprend de plus :
- une sous-étape de détermination (E52), mise en œuvre par un élément de détermination (DET), consistant à déterminer au moins un test de remplacement parmi les tests à exécuter de la liste de tests à exécuter et à transmettre ledit au moins un test de remplacement ;
- une sous-étape d'affichage (E53), mise en œuvre par le premier module d'affichage (DISP1), consistant à afficher, à l'opérateur (O), ledit au moins un test de remplacement ; et
- une sous-étape de décision (E54), mise en œuvre par un élément de décision (DEC2), consistant, pour l'opérateur (O), soit à valider ledit au moins un test de replacement dans l'ensemble de tests, soit à annuler ledit au moins un test de remplacement dans l'ensemble de tests et à transmettre au module de sélection respectivement, soit une information de validation (VT) de l'ensemble de tests comprenant ledit au moins un test de remplacement, soit une information d'annulation (AT) dudit au moins un test de remplacement.

3. Procédé selon la revendication 2,
**caractérisé en ce que** l'étape de sélection (E4) consiste également à :
- remplacer ledit au moins une partie de l'ensemble de tests à exécuter qui ne peut pas être exécutée par ledit au moins un test de remplacement dans l'ensemble de tests à exécuter en cas de réception d'une information de validation (VT) ; ou
- enlever ledit au moins une partie de l'ensemble de tests à exécuter qui ne peut pas être exécutée, en cas de réception d'une information d'annulation (AT).

4. Procédé selon l'une quelconque des revendications précédentes,
**caractérisé en ce qu'**il comprend également la succession d'étapes suivantes, mise en œuvre postérieurement à l'étape de commande (E9) :
- une troisième étape d'affichage (E10), mise en œuvre par un troisième module d'affichage (DISP3), consistant à afficher au moins certains des résultats de l'exécution des tests ; et
- une étape d'enregistrement (E11), mise en œuvre par un module d'enregistrement (REC), consistant à enregistrer les résultats de l'exécution des tests, émis par le module de commande (CONT), dans une base de données de résultats.

5. Procédé selon l'une quelconque des revendications précédentes,
**caractérisé en ce qu'**il comprend également, si un résultat de l'exécution d'un test empêche l'exécution de la suite de la séquence de tests représentant une situation particulière (PS) la succession d'étapes suivantes :
- une étape d'alerte (E12), mise en œuvre par un élément d'alerte (ALERT), consistant à commander l'arrêt de l'exécution de la séquence de tests par chacun des systèmes et à émettre une information d'alerte ; et
- une seconde étape d'ajustement (E13), mise en œuvre par un second module d'ajustement (ADJ2), consistant à déterminer une nouvelle séquence de tests en fonction des conditions d'exécution et des informations d'alerte reçues de l'élément d'alerte (ALERT).

6. Dispositif d'optimisation de test de systèmes d'un aéronef comportant :
- une base de données de tests (DATA1) contenant une liste de tests exécutables ;
- un premier module d'affichage (DISP1), configuré pour afficher, pour un opérateur (O), une liste de tests exécutables par au moins un desdits systèmes, chacun desdits tests exécutables étant associé à des conditions d'exécution ;
- un module de sélection (SEL), configuré pour sélectionner et pour transmettre, parmi la liste de tests exécutables, un ensemble de tests à exécuter, l'ensemble de tests à exécuter comprenant au moins un test exécutable ;
- un module d'optimisation (OPT), configuré pour déterminer et pour transmettre, en fonction des conditions d'exécution, une séquence de tests représentative d'une exécution optimisée de l'ensemble de tests à exécuter, ladite séquence de tests comprenant une pluralité de séries de tests exécutables en parallèle, chacune des séries de tests comprenant au moins un test dudit ensemble de tests à exécuter ;
- un deuxième module d'affichage (DISP2), configuré pour afficher, pour l'opérateur (O), la séquence de tests ;
- un module de décision (DEC1), configuré pour générer un signal correspondant soit à un premier signal (VS) représentatif d'une décision d'un opérateur de valider la séquence de tests, soit à un deuxième signal (AS) représentatif d'une décision de l'opérateur d'annuler la séquence de tests ; et
- un module de commande (CONT), configuré, si le signal généré par le module de décision correspond au premier signal (VS), pour commander l'exécution de la séquence de tests par chacun des systèmes qui leur sont associés, et pour générer des résultats de l'exécution des tests de la séquence de tests par chacun des systèmes;
**caractérisé en ce qu'**il comporte également :
- une base de données générale (DATA0) contenant une pluralité de bases de données de tests (DATA1) ;
- un module d'identification (IDEN) configuré pour transmettre à la base de données générale (DATA0) des informations d'identification d'un ensemble de systèmes particulier, lesdites informations d'identification étant fournies par l'opérateur (O) ; et
- un module de présélection (PRESEL) configuré pour présélectionner, parmi la pluralité de bases de données de test (DATA1) contenue dans la base de données générale (DATAO), une base de données de test (DATA1) associée aux informations d'identification transmise par le module d'identification (IDEN), ladite base de données de tests (DATA1) présélectionnée comprenant une liste de tests exécutables par au moins un desdits systèmes.

7. Dispositif selon la revendication 6,
**caractérisé en ce qu'**il comporte également un premier module d'ajustement (ADJ1), ledit premier module d'ajustement (ADJ1) comprenant :
- un élément d'acquisition (ACQ), configuré pour acquérir des informations de fonctionnement des systèmes lors d'utilisations précédentes ;
- un élément de détermination (DET), configuré, si les informations de fonctionnement comprennent des informations d'erreurs relatives à des erreurs de fonctionnement des systèmes empêchant l'exécution d'au moins une partie de l'ensemble de tests à exécuter, pour déterminer au moins un test de remplacement parmi les tests à exécuter de la liste de tests à exécuter et pour transmettre ledit au moins un test de remplacement ;
- le premier module d'affichage (DISP1), configuré pour afficher, à l'opérateur (O), ledit au moins un test de remplacement ; et
- un élément de décision (DEC2), configuré pour permettre à l'opérateur (O), soit de valider ledit au moins un test de replacement dans l'ensemble de tests, soit d'annuler ledit au moins un test de remplacement dans l'ensemble de tests, ledit élément de décision étant également configuré pour transmettre au module de sélection respectivement, soit une information de validation (VT) de l'ensemble de tests comprenant ledit au moins un test de remplacement, soit une information d'annulation (AT) dudit au moins un test de remplacement.

8. Dispositif selon la revendication 7,
**caractérisé en ce que** le module de sélection (SEL) est également configuré pour :
- remplacer ledit au moins une partie de l'ensemble de tests à exécuter qui ne peut pas être exécutée par ledit au moins un test de remplacement dans l'ensemble de tests à exécuter en cas de réception d'une information de validation (VT) ; ou
- enlever ledit au moins une partie de l'ensemble de tests à exécuter qui ne peut pas être exécutée, en cas de réception d'une information d'annulation (AT).

9. Dispositif selon l'une quelconque des revendications 6 à 8,
**caractérisé en ce qu'**il comporte également un module d'enregistrement (REC) configuré pour enregistrer les résultats de l'exécution des tests, émis par le module de commande (CONT), dans une base de données de résultats.

10. Dispositif selon l'une quelconque des revendications 6 à 9,
**caractérisé en ce que** le module de commande (CONT) comporte, si un résultat de l'exécution d'un test empêche l'exécution de la suite de la séquence de tests représentant une situation particulière (PS), un élément d'alerte (ALERT), configuré pour commander l'arrêt de l'exécution de la séquence de tests par chacun des systèmes et pour émettre une information d'alerte représentative d'une situation particulière (PS).

11. Dispositif selon la revendication 10,
**caractérisé en ce que** le module d'optimisation (OPT) comporte, en cas de réception d'une information d'alerte émise par l'élément d'alerte, un second module d'ajustement (ADJ2) configuré pour déterminer une nouvelle séquence de tests en fonction des conditions d'exécution et des informations d'alerte.

12. Aéronef comprenant un dispositif (1) d'optimisation, tel que celui spécifié sous l'une quelconque des revendications 6 à 11.

## Patentansprüche

1. Verfahren zur Optimierung von Tests von Systemen eines Luftfahrzeugs, das enthält:
- einen von einem ersten Anzeigemodul (DISP1) durchgeführten ersten Anzeigeschritt (E3), der darin besteht, einem Bediener (O) eine Liste von durch mindestens eines der Systeme ausführbaren Tests anzuzeigen, wobei jeder dieser ausführbaren Tests Ausführungsbedingungen zugeordnet ist;
- einen von einem Auswahlmodul (SEL) durchgeführten Auswahlschritt (E4), der darin besteht, aus der Liste von ausführbaren Tests eine Einheit von auszuführenden Tests auszuwählen und zu übertragen, wobei die Einheit von auszuführenden Tests mindestens einen ausführbaren Test enthält;
- einen von einem Optimierungsmodul (OPT) durchgeführten Optimierungsschritt (E6), der darin besteht, abhängig von den Ausführungsbedingungen eine Testfolge zu bestimmen und zu übertragen, die für eine optimierte Ausführung der Einheit von auszuführenden Tests repräsentativ ist, wobei die Testfolge eine Vielzahl von Reihen von parallel ausführbaren Tests enthält, wobei jede der Reihen von Tests mindestens einen Test der Einheit von auszuführenden Tests enthält;
- einen von einem zweiten Anzeigemodul (DISP2) durchgeführten zweiten Anzeigeschritt (E7), der darin besteht, dem Bediener (O) die Testfolge anzuzeigen;
- einen von einem Entscheidungsmodul (DEC1) durchgeführten Entscheidungsschritt (E8), der darin besteht, ein Signal zu erzeugen, das entweder einem ersten Signal (VS), das für eine Entscheidung eines Bedieners (O), die Testfolge zu validieren, repräsentativ ist, oder einem zweiten Signal (AS) entspricht, das für eine Entscheidung des Bedieners (O), die Testfolge zu annullieren, repräsentativ ist;
wenn das vom Entscheidungsmodul erzeugte Signal dem ersten Signal (VS) entspricht, enthält das Verfahren außerdem mindestens einen von einem Steuermodul (CONT) durchgeführten Steuerschritt (E9), der darin besteht, die Ausführung der Testfolge durch Systeme zu steuern und Ergebnisse der Ausführung der Tests der Testfolge durch jedes der Systeme zu erzeugen;
**dadurch gekennzeichnet, dass** es ebenfalls die Aufeinanderfolge folgender Schritte enthält, die vor dem ersten Anzeigeschritt (DISP1) durchgeführt wird:
- einen von einem Identifizierungsmodul (IDEN) durchgeführten Identifizierungsschritt (E1), der darin besteht, Identifizierungsinformationen einer Einheit von bestimmten Systemen an eine allgemeine Datenbank (DATA0) zu übertragen, wobei die Identifizierungsinformationen vom Bediener (O) bereitgestellt werden; und
- einen von einem Vorauswahlmodul (PRESEL) durchgeführten Vorauswahlschritt (E2), der darin besteht, aus einer Vielzahl von Testdatenbanken (DATA1), die in der allgemeinen Datenbank (DATA0) enthalten ist, eine Testdatenbank (DATA1) vorauszuwählen, die den vom Identifizierungsmodul (IDEN) übertragenen Identifizierungsinformationen zugeordnet ist, wobei die vorausgewählte Testdatenbank (DATA1) eine Liste von von mindestens einem der Systeme ausführbaren Tests enthält.

2. Verfahren nach einem der vorhergehenden Ansprüche, **dadurch gekennzeichnet, dass** es ebenfalls einen von einem ersten Anpassungsmodul (ADJ1) durchgeführten ersten Anpassungsschritt (E5) enthält, wobei der erste Anpassungsschritt (E5) die Aufeinanderfolge folgender Schritte enthält, die vor dem Optimierungsschritt (E6) durchgeführt wird:
- einen von einem Erfassungselement (ACQ) durchgeführten Erfassungsteilschritt (E51), der darin besteht, Betriebsinformationen der Systeme bei vorhergehenden Verwendungen zu erfassen;
wenn die Betriebsinformationen Fehlerinformationen bezüglich von Betriebsfehlern der Systeme enthalten, die die Ausführung mindestens eines Teils der Einheit von auszuführenden Tests verhindern, enthält die Aufeinanderfolge von Schritten außerdem:
- einen von einem Bestimmungselement (DET) durchgeführten Bestimmungsteilschritt (E52), der darin besteht, mindestens einen Ersatztest unter den auszuführenden Tests der Liste von auszuführenden Tests zu bestimmen und den mindestens einen Ersatztest zu übertragen;
- einen vom ersten Anzeigemodul (DISP1) durchgeführten Anzeigeteilschritt (E53), der darin besteht, dem Bediener (O) den mindestens einen Ersatztest anzuzeigen; und
- einen von einem Entscheidungselement (DEC2) durchgeführten Entscheidungsteilschritt (E54), der für den Bediener (O) darin besteht, entweder den mindestens einen Ersatztest in der Einheit von Tests zu validieren, oder den mindestens einen Ersatztest in der Einheit von Tests zu annullieren und an das Auswahlmodul entweder eine Validierungsinformation (VT) der Einheit von Tests, die den mindestens einen Ersatztest enthält, oder eine Annullierungsinformation (AT) des mindestens einen Ersatztests zu übertragen.

3. Verfahren nach Anspruch 2, **dadurch gekennzeichnet, dass** der Auswahlschritt (E4) ebenfalls darin besteht:
- den mindestens einen Teil der Einheit von auszuführenden Tests, der nicht ausgeführt werden kann, durch den mindestens einen Ersatztest in der Einheit von auszuführenden Tests im Fall des Empfangs einer Validierungsinformation (VT) zu ersetzen; oder
- den mindestens einen Teil der Einheit von auszuführenden Tests, der nicht ausgeführt werden kann, im Fall des Empfangs einer Annullierungsinformation (AT) zu entfernen.

4. Verfahren nach einem der vorhergehenden Ansprüche, **dadurch gekennzeichnet, dass** es ebenfalls die Aufeinanderfolge folgender Schritte enthält, die nach dem Steuerschritt (E9) durchgeführt wird:
- einen von einem dritten Anzeigemodul (DISP3) durchgeführten dritten Anzeigeschritt (E10), der darin besteht, mindestens manche der Ergebnisse der Ausführung der Tests anzuzeigen; und
- einen von einem Aufzeichnungsmodul (REC) durchgeführten Aufzeichnungsschritt (E11), der darin besteht, die Ergebnisse der Ausführung der Tests, die vom Steuermodul (CONT) gesendet werden, in einer Ergebnisdatenbank aufzuzeichnen.

5. Verfahren nach einem der vorhergehenden Ansprüche, **dadurch gekennzeichnet, dass** es ebenfalls, wenn ein Ergebnis der Ausführung eines Tests die Ausführung der Fortsetzung der Testfolge verhindert, die eine bestimmte Situation (PS) darstellt, die Aufeinanderfolge folgender Schritte enthält:
- einen von einem Warnelement (ALERT) durchgeführten Warnschritt (E12), der darin besteht, das Anhalten der Ausführung der Testfolge durch jedes der Systeme zu steuern und eine Warninformation zu senden; und
- einen von einem zweiten Anpassungsmodul (ADJ2) durchgeführten zweiten Anpassungsschritt (E13), der darin besteht, eine neue Testfolge abhängig von den Ausführungsbedingungen und den vom Warnelement (ALERT) empfangenen Warninformationen zu bestimmen.

6. Vorrichtung zur Optimierung von Tests von Systemen eines Luftfahrzeugs, die aufweist:
- eine Testdatenbank (DATA1), die eine Liste von ausführbaren Tests enthält;
- ein erstes Anzeigemodul (DISP1), das konfiguriert ist, einem Bediener (O) eine Liste von durch mindestens eines der Systeme ausführbaren Tests anzuzeigen, wobei jeder der ausführbaren Tests Ausführungsbedingungen zugeordnet ist;
- ein Auswahlmodul (SEL), das konfiguriert ist, aus der Liste von ausführbaren Tests eine Einheit von auszuführenden Tests auszuwählen und zu übertragen, wobei die Einheit von auszuführenden Tests mindestens einen ausführbaren Test enthält;
- ein Optimierungsmodul (OPT), das konfiguriert ist, abhängig von den Ausführungsbedingungen eine für eine optimierte Ausführung der Einheit von auszuführenden Tests repräsentative Testfolge zu bestimmen und zu übertragen, wobei die Testfolge eine Vielzahl von Reihen von parallel ausführbaren Tests enthält, wobei jede der Reihen von Tests mindestens einen Test der Einheit von auszuführenden Tests enthält;
- ein zweites Anzeigemodul (DISP2), das konfiguriert ist, dem Bediener (O) die Testfolge anzuzeigen;
- ein Entscheidungsmodul (DEC1), das konfiguriert ist, ein Signal zu erzeugen, das entweder einem für eine Entscheidung eines Bedieners, die Testfolge zu validieren, repräsentativen ersten Signal (VS) oder einem für eine Entscheidung des Bedieners, die Testfolge zu annullieren, repräsentativen zweiten Signal (AS) entspricht; und
- ein Steuermodul (CONT), das konfiguriert ist, wenn das vom Entscheidungsmodul erzeugte Signal dem ersten Signal (VS) entspricht, die Ausführung der Folge von Tests durch jedes der Systeme zu steuern, die ihnen zugeordnet sind, und um Ergebnisse der Ausführung der Tests der Testfolge durch jedes der Systeme zu erzeugen;
**dadurch gekennzeichnet, dass** sie ebenfalls aufweist:
- eine allgemeine Datenbank (DATA0), die eine Vielzahl von Testdatenbanken (DATA1) enthält;
- ein Identifizierungsmodul (IDEN), das konfiguriert ist, Identifizierungsinformationen einer bestimmten Einheit von Systemen an die allgemeine Datenbank (DATA0) zu übertragen, wobei die Identifizierungsinformationen vom Bediener (O) bereitgestellt werden; und
- ein Vorauswahlmodul (PRESEL), das konfiguriert ist, aus der in der allgemeinen Datenbank (DATA0) enthaltenen Vielzahl von Testdatenbanken (DATA1) eine den Identifizierungsinformationen zugeordnete Testdatenbank (DATA1) vorauszuwählen, die vom Identifizierungsmodul (IDEN) übertragen wird, wobei die vorausgewählte Testdatenbank (DATA1) eine Liste von von mindestens einem der Systeme ausführbaren Tests enthält.

7. Vorrichtung nach Anspruch 6, **dadurch gekennzeichnet, dass** sie ebenfalls ein erstes Anpassungsmodul (ADJ1) aufweist, wobei das erste Anpassungsmodul (ADJ1) enthält:
- ein Erfassungselement (ACQ), das konfiguriert ist, Betriebsinformationen der Systeme bei vorhergehenden Verwendungen zu erfassen;
- ein Bestimmungselement (DET), das konfiguriert ist, wenn die Betriebsinformationen Fehlerinformationen bezüglich von Betriebsfehlern der Systeme enthalten, die die Ausführung mindestens eines Teils der Einheit von auszuführenden Tests verhindern, mindestens einen Ersatztest unter den auszuführenden Tests der Liste von auszuführenden Tests zu bestimmen und den mindestens einen Ersatztest zu übertragen;
- das erste Anzeigemodul (DISP1), das konfiguriert ist, dem Bediener (O) den mindestens einen Ersatztest anzuzeigen; und
- ein Entscheidungselement (DEC2), das konfiguriert ist, dem Bediener (O) zu erlauben, entweder den mindestens einen Ersatztest in der Einheit von Tests zu validieren, oder den mindestens einen Ersatztest in der Einheit von Tests zu annullieren, wobei das Entscheidungselement ebenfalls konfiguriert ist, an das Auswahlmodul entweder eine Validierungsinformation (VT) der Einheit von Tests, die den mindestens einen Ersatztest enthält, oder eine Annullierungsinformation (AT) des mindestens einen Ersatztests zu übertragen.

8. Vorrichtung nach Anspruch 7, **dadurch gekennzeichnet, dass** das Auswahlmodul (SEL) ebenfalls konfiguriert ist:
- im Fall des Empfangs einer Validierungsinformation (VT) den mindestens einen Teil der Einheit von auszuführenden Tests, der nicht ausgeführt werden kann, durch den mindestens einen Ersatztest in der Einheit von auszuführenden Tests zu ersetzen; oder
- im Fall des Empfangs einer Annullierungsinformation (AT) den mindestens einen Teil der Einheit von auszuführenden Tests, der nicht ausgeführt werden kann, zu entfernen.

9. Vorrichtung nach einem der Ansprüche 6 bis 8, **dadurch gekennzeichnet, dass** sie ebenfalls ein Aufzeichnungsmodul (REC) aufweist, das konfiguriert ist, die Ergebnisse der Ausführung der Tests, die vom Steuermodul (CONT) gesendet werden, in einer Ergebnisdatenbank aufzuzeichnen.

10. Vorrichtung nach einem der Ansprüche 6 bis 9, **dadurch gekennzeichnet, dass**, wenn ein Ergebnis der Ausführung eines Tests die Ausführung der Fortsetzung der Testfolge verhindert, die eine bestimmte Situation (PS) darstellt, das Steuermodul (CONT) ein Warnelement (ALERT) aufweist, das konfiguriert ist, das Anhalten der Ausführung der Testfolge für jedes der Systeme zu steuern und eine für eine bestimmte Situation (PS) repräsentative Warninformation zu senden.

11. Vorrichtung nach Anspruch 10, **dadurch gekennzeichnet, dass** das Optimierungsmodul (OPT) im Fall des Empfangs einer vom Warnelement gesendeten Warninformation ein zweites Anpassungsmodul (ADJ2) aufweist, das konfiguriert ist, eine neue Testfolge abhängig von den Ausführungsbedingungen und den Warninformationen zu bestimmen.

12. Luftfahrzeug, das eine Optimierungsvorrichtung (1) wie in einem der Ansprüche 6 bis 11 spezifiziert enthält.

## Claims

1. Method for optimizing testing of systems of an aircraft, comprising:
- a first display step (E3), which is implemented by a first display module (DISP1) and consists in displaying, for an operator (O), a list of tests that can be executed by at least one of said systems, each of said executable tests being associated with execution conditions;
- a selection step (E4), which is implemented by a selection module (SEL) and consists in selecting and transmitting, from the list of executable tests, a set of tests to be executed, the set of tests to be executed comprising at least one executable test;
- an optimization step (E6), which is implemented by an optimization module (OPT) and consists in determining and transmitting, on the basis of the execution conditions, a sequence of tests that is representative of an optimized execution of the set of tests to be executed, said sequence of tests comprising a plurality of series of tests that can be executed in parallel, each of the series of tests comprising at least one test from said set of tests to be executed;
- a second display step (E7), which is implemented by a second display module (DISP2) and consists in displaying, to the operator (O), the sequence of tests;
- a decision step (E8), which is implemented by a decision module (DEC1) and consists in generating a signal that corresponds either to a first signal (VS) representative of a decision by an operator (O) to validate the sequence of tests or to a second signal (AS) representative of a decision by the operator (O) to cancel the sequence of tests;
if the signal generated by the decision module corresponds to the first signal (VS), the method further comprises at least one command step (E9), which is implemented by a control module (CONT) and consists in commanding the execution of the sequence of tests by systems and in generating results of the execution of the tests in the sequence of tests by each of the systems; **characterized in that** it also comprises the succession of the following steps, implemented prior to the first display step (DISP1):
- an identification step (E1), which is implemented by an identification module (IDEN) and consists in transmitting identification information for a set of particular systems to a general database (DATA0), said identification information being provided by the operator (0); and
- a preselection step (E2), which is implemented by a preselection module (PRESEL) and consists in preselecting, from among a plurality of test databases (DATA1) contained in the general database (DATA0), a test database (DATA1) associated with the identification information transmitted by the identification module (IDEN), said preselected test database (DATA1) comprising a list of tests that can be executed by at least one of said systems.

2. Method according to one of the preceding claims, **characterized in that** it also comprises a first adjustment step (E5), which is implemented by a first adjustment module (ADJ1), said first adjustment step (E5) comprising the succession of the following steps, implemented prior to the optimization step (E6):
- an acquisition sub-step (E51), which is implemented by an acquisition element (ACQ) and consists in acquiring operating information regarding the operation of the systems during previous uses;
if the operating information comprises error information relating to errors in the operation of the systems preventing the execution of at least a portion of the set of tests to be executed, the succession of steps further comprises:
- a determination sub-step (E52), which is implemented by a determination element (DET) and consists in determining at least one replacement test from among the tests to be executed in the list of tests to be executed and in transmitting said at least one replacement test;
- a display sub-step (E53), which is implemented by the first display module (DISP1) and consists in displaying, to the operator (O), said at least one replacement test; and
- a decision sub-step (E54), which is implemented by a decision element (DEC2) and consists, for the operator (O), either in validating said at least one replacement test in the set of tests or in cancelling said at least one replacement test in the set of tests and in transmitting, to the selection module, either an item of validation information (VT) for the set of tests comprising said at least one replacement test or an item of cancellation information (AT) for said at least one replacement test, respectively.

3. Method according to Claim 2,
**characterized in that** the selection step (E4) also consists in:
- replacing said at least one portion of the set of tests to be executed that cannot be executed with said at least one replacement test in the set of tests to be executed if an item of validation information (VT) is received; or
- removing said at least one portion of the set of tests to be executed that cannot be executed if an item of cancellation information (AT) is received.

4. Method according to any one of the preceding claims, **characterized in that** it also comprises the succession of the following steps, implemented after the command step (E9) :
- a third display step (E10), which is implemented by a third display module (DISP3) and consists in displaying at least some of the results of the execution of the tests; and
- a recording step (E11), which is implemented by a recording module (REC) and consists in recording the results of the execution of the tests, transmitted by the control module (CONT), in a results database.

5. Method according to any one of the preceding claims, **characterized in that**, if a result of the execution of a test prevents the execution of the remainder of the sequence of tests, representing a special situation (PS), it also comprises the succession of the following steps:
- an alert step (E12), which is implemented by an alert element (ALERT) and consists in commanding the stoppage of the execution of the sequence of tests by each of the systems and in transmitting an item of alert information; and
- a second adjustment step (E13), which is implemented by a second adjustment module (ADJ2) and consists in determining a new sequence of tests on the basis of the execution conditions and the alert information received from the alert element (ALERT).

6. Device for optimizing testing of systems of an aircraft, including:
- a test database (DATA1) containing a list of executable tests;
- a first display module (DISP1), which is configured to display, for an operator (O), a list of tests that can be executed by at least one of said systems, each of said executable tests being associated with execution conditions;
- a selection module (SEL), which is configured to select and transmit, from the list of executable tests, a set of tests to be executed, the set of tests to be executed comprising at least one executable test;
- an optimization module (OPT), which is configured to determine and transmit, on the basis of the execution conditions, a sequence of tests that is representative of an optimized execution of the set of tests to be executed, said sequence of tests comprising a plurality of series of tests that can be executed in parallel, each of the series of tests comprising at least one test from said set of tests to be executed;
- a second display module (DISP2), which is configured to display, for the operator (O), the sequence of tests;
- a decision module (DEC1), which is configured to generate a signal that corresponds either to a first signal (VS) representative of a decision by an operator to validate the sequence of tests or to a second signal (AS) representative of a decision by the operator to cancel the sequence of tests; and
- a control module (CONT), which is configured, if the signal generated by the decision module corresponds to the first signal (VS), to command the execution of the sequence of tests by each of the systems associated with said tests and to generate results of the execution of the tests in the sequence of tests by each of the systems; **characterized in that** it also includes:
- a general database (DATA0) containing a plurality of test databases (DATA1);
- an identification module (IDEN), which is configured to transmit identification information for a particular set of systems to the general database (DATA0), said identification information being provided by the operator (0); and
- a preselection module (PRESEL), which is configured to preselect, from among the plurality of test databases (DATA1) contained in the general database (DATA0), a test database (DATA1) associated with the identification information transmitted by the identification module (IDEN), said preselected test database (DATA1) comprising a list of tests that can be executed by at least one of said systems.

7. Device according to Claim 6,
**characterized in that** it also includes a first adjustment module (ADJ1), said first adjustment module (ADJ1) comprising:
- an acquisition element (ACQ), which is configured to acquire operating information regarding the operation of the systems during previous uses;
- a determination element (DET), which is configured, if the operating information comprises error information relating to errors in the operation of the systems preventing the execution of at least a portion of the set of tests to be executed, to determine at least one replacement test from among the tests to be executed in the list of tests to be executed and to transmit said at least one replacement test;
- the first display module (DISP1), which is configured to display, to the operator (O), said at least one replacement test; and
- a decision element (DEC2), which is configured to allow the operator (O) either to validate said at least one replacement test in the set of tests or to cancel said at least one replacement test in the set of tests,
said decision element also being configured to transmit, to the selection module, either an item of validation information (VT) for the set of tests comprising said at least one replacement test or an item of cancellation information (AT) for said at least one replacement test, respectively.

8. Device according to Claim 7,
**characterized in that** the selection module (SEL) is also configured to:
- replace said at least one portion of the set of tests to be executed that cannot be executed with said at least one replacement test in the set of tests to be executed if an item of validation information (VT) is received; or
- remove said at least one portion of the set of tests to be executed that cannot be executed if an item of cancellation information (AT) is received.

9. Device according to any one of Claims 6 to 8,
**characterized in that** it also includes a recording module (REC), which is configured to record the results of the execution of the tests, transmitted by the control module (CONT), in a results database.

10. Device according to any one of Claims 6 to 9,
**characterized in that** the control module (CONT) includes, if a result of the execution of a test prevents the execution of the remainder of the sequence of tests, representing a special situation (PS), an alert element (ALERT), which is configured to command the stoppage of the execution of the sequence of tests by each of the systems and to transmit an item of alert information representative of a special situation (PS).

11. Device according to Claim 10,
**characterized in that** the optimization module (OPT) includes, if an item of alert information transmitted by the alert element is received, a second adjustment module (ADJ2), which is configured to determine a new sequence of tests on the basis of the execution conditions and the alert information.

12. Aircraft comprising an optimization device (1) such as that specified in any one of Claims 6 to 11.
